(19)

Europäisches Patentamt

European Patent Office

Office européen des brevets

(11) **EP 1 568 979 A1**

## EUROPEAN PATENT APPLICATION
published in accordance with Art. 158(3) EPC

(43) Date of publication:
**31.08.2005 Bulletin 2005/35**

(51) Int Cl.⁷: **G01K 5/02**, B82B 1/00, B82B 3/00

(21) Application number: **03777259.7**

(22) Date of filing: **04.12.2003**

(86) International application number:
**PCT/JP2003/015548**

(87) International publication number:
**WO 2004/051207 (17.06.2004 Gazette 2004/25)**

(84) Designated Contracting States:
**AT BE BG CH CY CZ DE DK EE ES FI FR GB GR HU IE IT LI LU MC NL PT RO SE SI SK TR**

(30) Priority: **04.12.2002 JP 2002353054**

(71) Applicant: **National Institute for Materials Science Ibaraki 305-0047 (JP)**

(72) Inventors:
• **BANDO, Yoshio**
  **National Ins. for Materials Science**
  **Tsukuba-shi, Ibaraki 305-0047 (JP)**

• **GAO, Yihua National Ins. for Materials Science**
  **Tsukuba-shi, Ibaraki 305-0047 (JP)**
• **GOLBERG, Dmitri National Ins. for Materials Sci.**
  **Tsukuba-shi, Ibaraki 305-0047 (JP)**

(74) Representative: **Calamita, Roberto**
  **Frank B. Dehn & Co.,**
  **European Patent Attorneys,**
  **179 Queen Victoria Street**
  **London EC4V 4EL (GB)**

(54) **TEMPERATURE-SENSING ELEMENT AND METHOD OF MANUFACTURING THE ELEMENT, AND NANO-THERMOMETER**

(57)     A new nanothermometer comprises, as a temperature sensitive element, a carbon nanotube in which continuous and columnar indium is included, and comprises a temperature-measuring section for measuring the temperature of an environment by measuring the length in the axial direction of the columnar indium, in the temperature sensitive element, which can be changed with a change in the environment temperature. The nanothermometer can be used to measure temperatures in a wide temperature range in an environment having a size of micrometers or less.

Fig. 3

EP 1 568 979 A1

## Description

Technical Field

The present invention relates to a temperature sensitive element, a process for producing the same, and a nanothermometer. More specifically, the present invention relates to a temperature sensitive element comprising a carbon nanotube in which indium is included, a process for producing the same, and a new nanothermometer wherein the temperature sensitive element is used to make it possible to measure temperatures within a wide temperature range in an environment having a micrometer size.

Background Art

Many researchers have made a great number of studies since carbon nanotubes (CNTs) were discovered in 1991. As a result, methods for using carbon nanotubes have been found out in various fields so far.

For example, carbon nanotubes can be used for an electric field effect element, the tip of a probe for a scanning probe microscope, superconductive material, a high-sensitivity microbalance, structure material, a micro-forceps for operation on a nanometer scale, a gas detector, a hydrogen energy storing device, and the like. Studies for incorporating a filler into carbon nanotubes have been made (non-patent document 1 and patent document 1).

On the other hand, in recent years, many researchers have been taking part in at least the fields of researching micrometer size areas. Thus, a nanothermometer capable of measuring the temperature of an environment having a micrometer size has become necessary. So far, however, a high-precision nanothermometer useful for environments having a micrometer size has not been found out. Meanwhile, according to thermometers which have been known so far, the temperature range which can be measured is relatively narrow. It is therefore necessary that when temperatures within a wide range are measured, several kinds of thermometers are separately prepared dependently on temperatures to be measured. Thus, labor and costs are required. Consequently, a thermometer capable of measuring temperatures within a wide range by itself has been intensely desired.

In such circumstances, the inventors of the present invention once made a nanothermometer using a carbon nanotube in which gallium is included (non-patent document 2). This nanothermometer, which uses a carbon nanotube in which gallium is included, can be expected as a nanothermometer capable of measuring temperatures within a wide range precisely in a micrometer size environment. However, the inventors of this application have repeatedly made research to find out a nanothermometer capable of measuring temperatures within a wide range more precisely.

Non-patent document 1: P. Ajayan and S. Iijima, "Capillarity-induced Filling of Carbon Nanotubes", Nature, Vol. 361, pp. 333-334, 1993,

Non-patent document 2: Yihua Gao, Yoshio Bando "Carbon nanothermometer containing gallium", Nature, Vol. 415, p. 599, February 7, 2002

Patent document 1: Japanese Patent Application Laid-Open (JP-A) No. 06-227806

Disclosure of the Invention

In light of the above-mentioned situation, the present invention has been made, and an object thereof is to overcome problems in the prior art and to provide a new nanothermometer capable of measuring temperatures within a wide temperature range with a high precision in an environment having a micrometer size.

To solve the above-mentioned problems, firstly, the present invention provides a temperature sensitive element comprising a carbon nanotube in which continuous and columnar indium is included, wherein the length in the axial direction of the columnar indium in the carbon nanotube can be changed with a change in the temperature of an environment. Secondly, the present invention provides the temperature sensitive element according to the first invention, wherein the length in the axial direction of the carbon nanotube is from 1 to 10 $\mu$m (inclusive), and the diameter thereof is from 100 to 200 nm (inclusive).

Thirdly, the present invention provides a nanothermometer comprising the temperature sensitive element according to the first or second invention and comprising a temperature-measuring section for measuring the temperature of an environment by measuring the length in the axial direction of the columnar indium, in the temperature sensitive element, which can be changed with a change in the environment temperature.

Fourthly, the present invention provides the nanothermometer according to the third invention, wherein the environment temperature in the temperature range of 170 to 400$°$C (inclusive) is measured. Fifthly, the present invention also provides the nanothermometer according to the third or fourth invention, wherein the error of the measured temperature is within $\pm$0.23$°$C. Sixthly, the present invention also provides the nanothermometer according to any one of the third to the fifth inventions, wherein a transmission electron microscope is used in the temperature-measuring section to measure the length in the axial direction of the columnar indium in the carbon nanotube.

Seventhly, the present invention provides a process for producing a temperature sensitive element according to the first or second invention, comprising the step of mixing indium oxide powder and carbon powder into a uniform state, the step of subjecting the mixed powder to heating treatment at a temperature of 900 to 1400°C (inclusive) under inert gas flow, thereby vaporizing the mixture, and the step of causing the vapor to react at a temperature of 800 to 850°C (inclusive).

Eighthly, the present invention provides the process for producing a temperature sensitive element according to the seventh invention, wherein the weight ratio of the indium oxide powder to the carbon powder is from 6 : 1 to 15 : 1. Ninthly, the present invention provides the process for producing a temperature sensitive element according to the seventh or eighth invention, wherein the carbon powder is amorphous activated carbon. Tenthly, the present invention provides the process for producing a temperature sensitive element according to any one of the seventh to the ninth inventions, wherein the inert gas is nitrogen gas.

Eleventhly, the present invention provides the process for producing a temperature sensitive element according to any one of the seventh to the tenth inventions, wherein a vertical high frequency induction heating furnace is used to conduct the heating treatment. Twelfthly, the present invention provides the process for producing a temperature sensitive element according to any one of the seventh to the eleventh inventions, wherein the heating treatment is conducted at a temperature of 1200 to 1400°C (inclusive) for one hour or more.

Brief Description of the Drawings

Fig. 1(a) is a photograph of a transmission electron microscopic image of carbon nanotubes in which indium is included.
Fig. 1(b) is a photograph of an X-ray diffraction pattern of the carbon nanotubes in which indium is included.
Fig. 1(c) is a diagram showing a pattern of an X-ray energy dispersive spectrum.
Fig. 2(a) is a photograph of a transmission electron microscopic image of a carbon nanotube in which indium is included at 20°C.
Fig. 2(b) is a photograph of a transmission electron microscopic image of one tip of the carbon nanotube in which indium is included at 377°C.
Fig. 2(c) is a photograph of a transmission electron microscopic image containing a closed tip of the carbon nanotube in which indium is included.
Figs. 2(d) and (e) are each a photograph of a transmission electron microscopic image of a carbon nanotube in which indium is included, the tip of the nanotube being spherical.
Figs. 3(a) to (d) are photographs of transmission electron microscopic images of the heights of columnar indiums at 170°C, 270°C, 322°C, and 377°C, respectively.
Fig. 4 is a graph showing a relationship between the height of the forefront face of indium and temperature.

Reference numbers in the drawings represent the following:

1 one-dimensional nano-scale wire
2 carbon nanotube
3 indium
4 gallium

Best Modes for Carrying Out the Invention

The present invention has characteristics as described above, and embodiments thereof are described hereinafter.

The temperature sensitive element of the present invention is characterized by comprising a carbon nanotube in which continuous and columnar indium is included, wherein the length in the axial direction of the columnar indium in the carbon nanotube can be changed with a change in the temperature of an environment.

Since the temperature sensitive element of the present invention makes use of fine structure of the carbon nanotube, this element can be made up to a very small temperature sensitive element for a micrometer size. The wording "temperature sensitive element" means an element which directly sensitizes temperature and changes the state (such as the volume or the resistance) thereof with a change in temperature.

Specifically, it is possible to form a temperature sensitive element wherein the length in the axial direction of a carbon nanotube is from 1 to 10 μm (inclusive) and the diameter of the nanotube is from 100 to 200 nm (inclusive). The use of this makes it possible to realize a nanothermometer capable of measuring, with a high precision, temperatures of an environment having a micrometer size.

In the temperature sensitive element of the present invention, indium is included in a hollow cylinder of the inside of the carbon nanotube; therefore, the indium has a continuous columnar shape.

The nanothermometer of the present invention is characterized by comprising the above-mentioned temperature sensitive element, and comprising a temperature-measuring section for measuring the temperature of an environment by measuring the length in the axial direction of the columnar indium, in the temperature sensitive element, which can be changed with a change in the environment temperature.

The action principle of the nanothermometer of the present invention is based on the expansion property of the indium present inside the carbon nanotube, the property being dependent on temperature change. A change similar to the change of expansion and contraction of columnar mercury in a mercury thermometer, which is widely known, is observed in the columnar indium inside the carbon nanotube. The length in the axial direction of the columnar indium inside the carbon nanotube is measured, whereby temperature can be measured. In this case, a transmission electron microscope is used in the temperature-measuring section to make it possible to measure the length in the axial direction of the columnar indium inside the carbon nanotube.

The reason why indium is selected as the material included in the carbon nanotube in the present invention is that: indium has a relatively low melting point of 156.6°C but has a high boiling point of 2050°C, whereby the temperature range of the liquid phase thereof is high so that the vapor pressure thereof is low even at high temperatures; therefore, indium is suitable for being used for a thermometer for a wide temperature range.

In other words, the nanothermometer of the present invention has a wide measurable temperature range, using a wider temperature range (156.6 to 2050°C) of the liquid phase of indium than the range (-38.87 to 356.58°C) of the liquid phase of mercury.

When temperature is raised within the temperature range of 170 to 400°C (inclusive), the length of the columnar indium in the nanothermometer of this application increases linearly. When temperature is dropped, the length decreases linearly also. Accordingly, when the nanothermometer of the present invention is used within the temperature range of 170 to 400°C, the temperature of an environment can easily be measured with a high precision from the length of the indium included in the carbon nanotube. More specifically, the environment temperature can be measured in such a manner that the error of the measured temperature is within ±0.23°C.

It is therefore possible to use the nanothermometer of the present invention suitably for research associated with the measurement of temperatures within a wide temperature range in an environment having a micrometer size.

The process for producing a temperature sensitive element of the present invention is characterized by comprising the step of mixing indium oxide powder and carbon powder into a uniform state, the step of subjecting the mixed powder to heating treatment at a temperature of 900 to 1400°C (inclusive) under inert gas flow, thereby vaporizing the mixture, and the step of causing the vapor to react at a temperature of 800 to 850°C (inclusive).

As the raw material of the carbon nanotube used in the temperature sensitive element, carbon powder can be used. As this carbon powder, carbon powder having a relatively high purity, for example, a purity of 90% or more can be used. The carbon powder is desirably activated carbon, more preferably amorphous activated carbon. As the raw material of the columnar indium included in the carbon nanotube, indium oxide can be preferably used. As the inert gas, nitrogen gas can be preferably used.

In the process of the present invention, an excellent temperature sensitive element can be formed by adjusting the weight ratio of indium oxide and carbon powder into the range of 6 : 1 to 15 : 1, more preferably 11.6 : 1.

The indium oxide powder and the carbon powder are mixed into a uniform state, and the mixture is subjected to heating treatment at a temperature of 900 to 1400°C (inclusive) under the flow of the inert gas, whereby the indium oxide and the carbon powder can be vaporized. The heating treatment at this time can be conducted using a vertical high frequency induction heating furnace, which is a widely usable apparatus and is suitable for heating an object to high temperature. When the heat treatment is conducted at a temperature of 1200 to 1400°C for one hour or more, an excellent temperature sensitive element is formed. The vapor is carried with the inert gas flow, and is caused to react at a temperature of 800 to 850°C (inclusive) to generate a deposit.

For example, in the case where a pipe for introducing the inert gas flow is fitted to the bottom of a susceptor of the vertical high frequency induction heating furnace and an exhaust pipe is fitted to the top thereof, the temperature sensitive element of the present invention can be obtained as a deposit on the inside surface of the top exhaust pipe.

Herein, the principle of the process for producing a temperature sensitive element of the present invention is described.

Two processes are in generally known for producing a carbon nanotube in which a certain kind of material is included. One of them is a process of using an existing carbon nanotube to cause the material to be included in the carbon nanotube by a capillary phenomenon method, a melted medium method or a wet chemical dissolving method. The other is a process of producing the carbon nanotube and the material at the same time. The process for producing a temperature sensitive element comprising of a carbon nanotube in which indium is included in the present invention is the second process of the above-mentioned processes.

In the present invention, the production of a carbon nanotube in which indium is included is related to chemical reactions at two stages. First, in a crucible made of graphite at a higher temperature than about 900°C, indium oxide powder and amorphous carbon powder reacts with each other as shown by the following formula, whereby vapor of $In_2O$ and CO can be generated:

$$In_2O_3 \text{ (solid)} + 2C \text{ (solid)} \rightarrow In_2O \text{ (vapor)} + 2CO \text{ (vapor)}$$

The volume Gibbs energy change for generating the vapor of 1 mole of $In_2O$ at 1360°C is calculated as -256 kJ. Considering a high surface Gibbs energy of the amorphous activated carbon powder, the above-mentioned reaction would be sufficiently caused.

Next, the vapor of $In_2O$ and CO reaches the inside surface (about 800°C) of an exhaust port in the cylinder made of graphite. As a result, vapor/vapor reaction is caused as follows, so as to generate indium and carbon:

$$In_2O \text{ (vapor)} + 3CO \text{ (vapor)} \rightarrow 2In \text{ (solid)} + C \text{ (solid)} + 2CO_2 \text{ (vapor)}$$

To generate 1 mole of carbon in this reaction, a Gibbs energy of - 42 kJ is reduced according to calculation.

As described above, a temperature sensitive element which comprises a carbon nanotube in which indium is included can be formed by chemical reactions at two stages.

Hereinafter, working examples are given along the attached drawings to describe embodiments of the present invention in more detail. Of course, this invention is not limited to the following examples, and details thereof can be modified into various embodiments.

Examples

<Example 1>

First, a temperature sensitive element comprises a carbon nanotube in which indium was included was produced using a vertical high frequency induction heating furnace. This vertical high frequency induction heating furnace was made of a transparent quartz glass tube of 50 cm length, 12 cm diameter and 0.25 cm thickness. A cylinder made of high-purity graphite was fitted into this quartz glass tube. This cylinder had a length of 7 cm, an outer diameter of 4.5 cm and an inner diameter of 3.5 cm. A gas introducing pipe and a gas exhaust pipe were set to the bottom and the top of this cylinder, respectively. Furthermore, a crucible made of graphite and having a diameter of 2 cm and a height of 2 cm was set inside this cylinder.

A uniform mixture of indium oxide powder and amorphous activated carbon powder, the weight ratio therebetween being at 11.6 : 1, was put into this crucible and then high-purity nitrogen gas flow was introduced into the heating surface. The mixture was then subjected to heating treatment at 1360°C for 2 hours. After the heating treatment, the starting mixture inside the graphite crucible disappeared. A small amount of a material was deposited on the inside surface of an exhaust port in the upper part. The temperature of the vicinity of the exhaust port, wherein the material was deposited, was about 800°C.

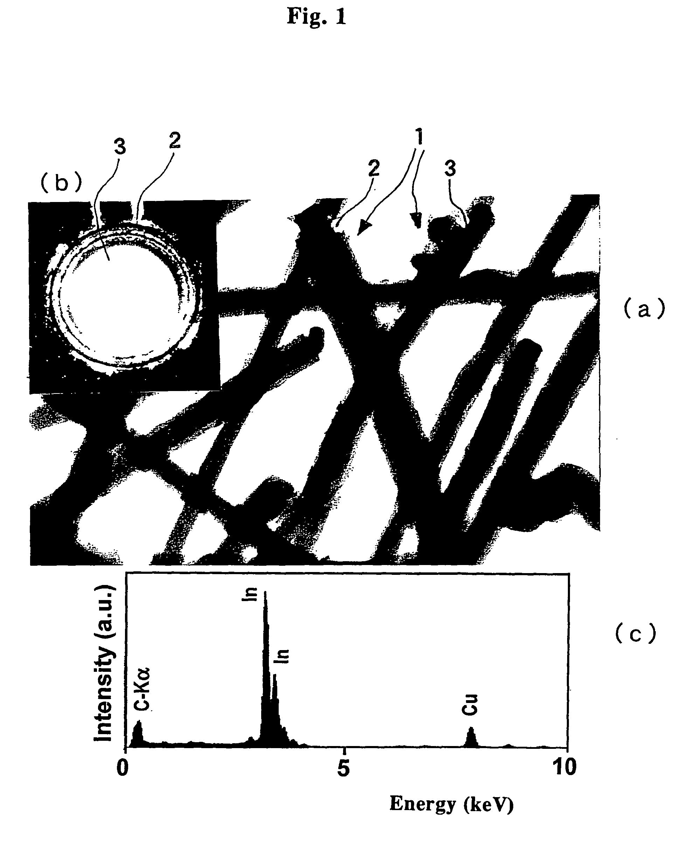

The deposited material was collected and analyzed with a 300-kV electric field emission analysis high-resolution transmission electron microscope to which an X-ray energy dispersive spectrometer was fitted. The result is shown in Figs. 1. Fig. 1(a) is a photograph of a transmission electron microscopic image of one-dimensional nano-scale wires (1) of the collected deposit. The length of the one-dimensional nano-scale wires (1) was about 10 µm, and the diameter thereof was from 100 to 200 nm.

Fig. 1(b), which is at the upper left corner in Fig. 1(a), is a photograph of the electron beam diffraction pattern of one out of the one-dimensional nano-scale wires (1) in Fig. 1(a), which shows that the outside layer is a carbon nanotube (2) and a material included therein is indium (3). Fig. 1(c) is a graph showing a measurement result of the X-ray energy dispersive spectrum of the deposit. From this figure, it was understood that the deposit had a composition composed of indium and carbon. The peak of Cu in Fig. 1(c) is a peak originating from a copper grid fitted to the sample used for the measurement with the transmission electron microscope.

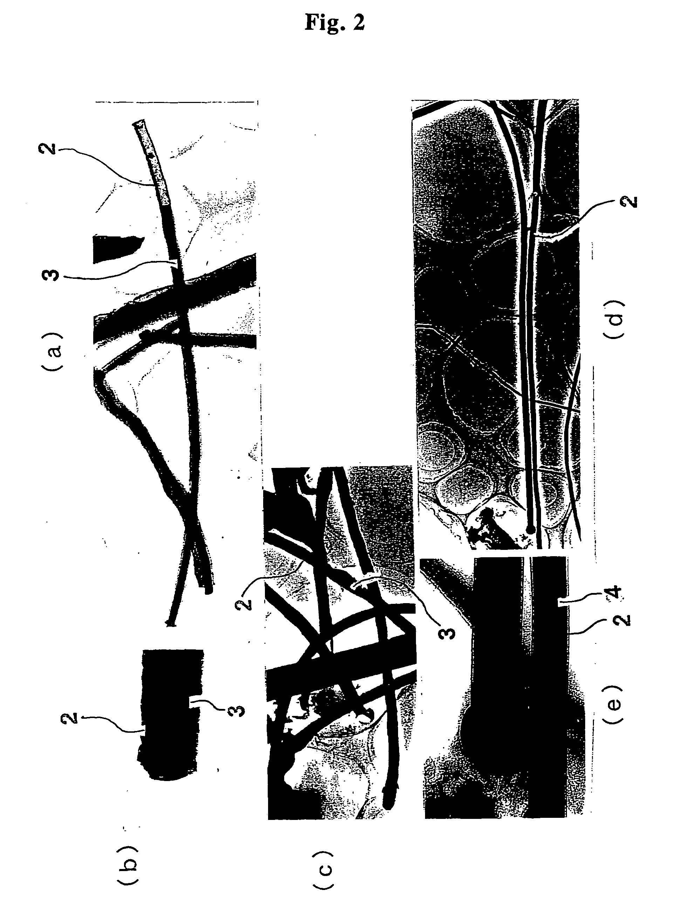

Next, in Fig. 2(a) is shown a photograph of a transmission electron microscopic image of a carbon nanotube in which indium was included, the form of this carbon nanotube being kept complete from one end thereof to the other end. Fig. 2(a) is an image of a carbon nanotube (2) at 20°C in which indium (3) was included, and Fig. 2(b) is a photograph of a transmission electron microscopic image of the tip of the carbon nanotube (2) when this sample was heated to 377°C. After the heating, the same shape was kept. It was understood from this result that the tip of the carbon nanotube (2) was closed.

In Fig. 2(c) is shown a photograph of a transmission electron microscopic image of the carbon nanotube (2), including the closed tip, in which the indium (3) was included. In the same manner as in Fig. 2(a), the thickness of the tip was equal to that of portions apart from the tip. On the other hand, for comparison, Figs. 2(d) and (e) show photographs of a portion of a carbon nanotube (2), including the tip thereof, in which gallium (4) was included; and the tip of the carbon nanotube, respectively. It is understood that the tip of the carbon nanotube was in a spherical form and this portion was thicker than that of portions other than the tip, which is different from Figs. 2(a) and (c).

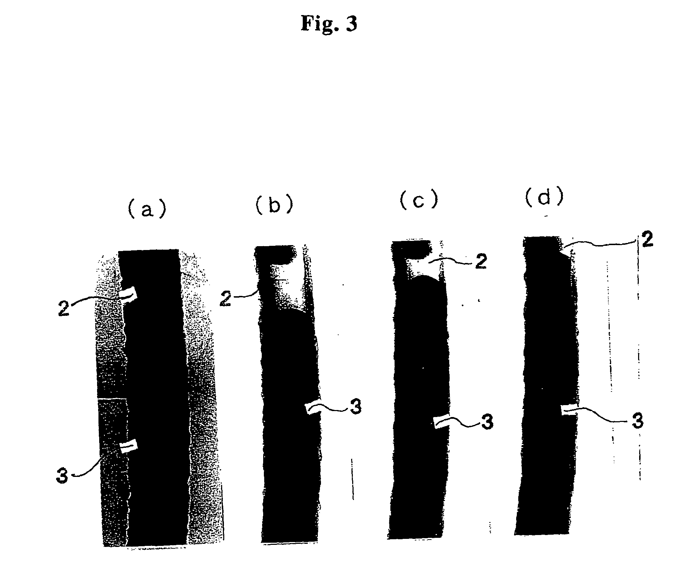

Next, the deposit was heated in the microscope, using a Gatan heating holder and a heating system accompanying the holder. Photographs of transmission electron microscopic images in Figs. 3(a) to 3(d) show the heights of the forefront face of indium in the case where the indium was heated to a higher temperature than the melting point of the indium. The temperatures about Figs. 3(a), 3(b), 3(c) and 3(d) are 170°C, 270°C, 322°C, and 377°C, respectively. The forefront face of the indium becomes higher as the temperature gets higher, as is evident from Figs. 3(a) to (d).

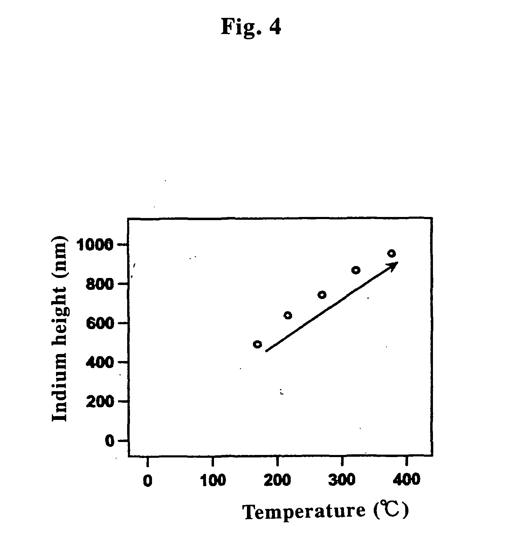

Fig. 4 shows a graph showing a relationship between the height of the forefront face of indium and the temperature. As is evident from Fig. 4, it is understood that a substantially linear relationship is realized in the range of 170 to 400°C (inclusive) between the height of the forefront face of the indium and the temperature. In the case that the indium is liquid, the expansion coefficient thereof is $0.1 \times 10^{-3}$ /°C. Thus, when the temperature is changed from 20 to 400°C, the effect of the expansion of the carbon nanotube onto the height of the forefront face of the indium can be ignored since the linear expansion coefficient of the graphite-form carbon, which is the component of the carbon nanotube, is a very small of $1 \times 10^{-6}$ in the range of 20 to 400°C.

Accordingly, the relationship between the height of the indium forefront face and the temperature depends only on a volume change of the columnar indium, which accompanies a change in the environment temperature.

From the results in Fig. 4, the carbon nanotube in which the columnar indium is included can be used as a temperature sensitive element in the temperature range of 170 to 400°C, wherein the indium is in a liquid state. Thus, it is possible to form a nanothermometer having this temperature sensitive element and a temperature-measuring section for measuring the length of the columnar indium of the temperature sensitive element, the length being changed with a change in the temperature of an environment, thereby measuring the environment temperature.

About the nanothermometer of the present invention, the following can be referred to.

From the inclination of the linear line in Fig. 4, the variation ΔH of the forefront face of the indium is represented by the following:

$$\Delta H = 0.857\ (t - 170)$$

wherein ΔH is the difference between the height of the forefront face of the indium at a temperature t°C and the indium forefront face height at 170°C. If the ΔH (nm) can be known, the temperature t (°C) can be measured. The precision in temperature measurement by use of the nanothermometer of the present invention can be set to 0.23°C by setting the resolution of the transmission electron microscopic image in the temperature-measuring section to 0.2 nm.

As described above, the nanothermometer of the present invention can be applied to temperature measurement in an environment of a micrometer size, and can fulfill an important role in various research fields associated with the temperature measurement of the micro meter size environment.

Industrial Applicability

As described in detail, according to the present invention, it is possible to provide a new nanothermometer which can be used to measure temperatures in a wide temperature range in an environment having a size of micrometers or less.

**Claims**

1. A temperature sensitive element, comprising a carbon nanotube in which continuous and columnar indium is included, wherein the length in the axial direction of the columnar indium in the carbon nanotube can be changed with a change in the temperature of an environment.

2. The temperature sensitive element according to claim 1, wherein the length in the axial direction of the carbon nanotube is from 1 to 10 μm (inclusive), and the diameter thereof is from 100 to 200 nm (inclusive).

3. A nanothermometer, comprising the temperature sensitive element according to claim 1 or 2, and comprising a temperature-measuring section for measuring the temperature of an environment by measuring the length in the axial direction of the columnar indium, in the temperature sensitive element, which can be changed with a change in the environment temperature.

4. The nanothermometer according to claim 3, wherein the environment temperature in the temperature range of 170 to 400°C (inclusive) is measured.

5. The nanothermometer according to claim 3 or 4, wherein the error of the measured temperature is within ±0.23°C.

6. The nanothermometer according to any one of claims 3 to 5, wherein a transmission electron microscope is used in the temperature-measuring section to measure the length in the axial direction of the columnar indium in the carbon nanotube.

7. A process for producing a temperature sensitive element according to claim 1 or 2, comprising the step of mixing indium oxide powder and carbon powder into a uniform state, the step of subjecting the mixed powder to heating treatment at a temperature of 900 to 1400°C (inclusive) under inert gas flow, thereby vaporizing the mixture, and the step of causing the vapor to react at a temperature of 800 to 850°C (inclusive).

8. The process for producing a temperature sensitive element according to claim 7, wherein the weight ratio of the indium oxide powder to the carbon powder is from 6 : 1 to 15 : 1.

9. The process for producing a temperature sensitive element according to claim 7 or 8, wherein the carbon powder is amorphous activated carbon.

10. The process for producing a temperature sensitive element according to any one of claims 7 to 9, wherein the inert gas is nitrogen gas.

11. The process for producing a temperature sensitive element according to any one of claims 7 to 10, wherein a vertical high frequency induction heating furnace is used to conduct the heating treatment.

12. The process for producing a temperature sensitive element according to any one of claims 7 to 11, wherein the heating treatment is conducted at a temperature of 1200 to 1400°C (inclusive) for one hour or more.

**Fig. 1**

Fig. 2

**Fig. 3**

## Fig. 4

## INTERNATIONAL SEARCH REPORT

| International application No. |
|---|
| PCT/JP03/15548 |

| A. CLASSIFICATION OF SUBJECT MATTER |
|---|
| Int.Cl$^7$ G01K5/02, B82B1/00, B82B3/00 |

According to International Patent Classification (IPC) or to both national classification and IPC

| B. FIELDS SEARCHED |
|---|

Minimum documentation searched (classification system followed by classification symbols)
Int.Cl$^7$ G01K5/02, B82B1/00, B82B3/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | Yihua Gao, Yoshio BANDO, 'Carbon nanothermometer containing gallium', Nature 07 February, 2002 (07.02.02), Vol.45, page 599, Fig. 1a-d | 1–12 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 03 March, 2004 (03.03.04) | 16 March, 2004 (16.03.04) |

| Name and mailing address of the ISA/ | Authorized officer |
|---|---|
| Japanese Patent Office | |
| Facsimile No. | Telephone No. |

Form PCT/ISA/210 (second sheet) (July 1998)